(19) Europäisches Patentamt
European Patent Office
Office européen des brevets

(11) Numéro de publication: 0 255 453 B1

# (12) FASCICULE DE BREVET EUROPEEN

(45) Date de publication du fascicule du brevet: 20.06.90

(51) Int. Cl.5: C07F 7/08

(21) Numéro de dépôt: 87420193.2

(22) Date de dépôt: 09.07.87

## (54) Procédé de préparation d'hexaalkyldisilane.

(30) Priorité: 25.07.86 FR 8610990

(43) Date de publication de la demande: 03.02.88 Bulletin 88/5

(45) Mention de la délivrance du brevet: 20.06.90 Bulletin 90/25

(84) Etats contractants désignés: AT BE CH DE ES FR GB GR IT LI LU NL SE

(56) Documents cités:
US-A- 4 309 556

E. MÜLLER et al.: "Methoden der organischen Chemie", (HOUBEN-WEYL), vol. XIII/5, édition 4, "Organo-Silicium-Verbindungen", 1980, pages 300-303, George Thieme Verlag, Stuttgart, DE

(73) Titulaire: RHONE-POULENC CHIMIE, 25, quai Paul Doumer, F-92408 Courbevoie Cédex(FR)

(72) Inventeur: Ferlut, Jean-Serge, 2, avenue du Parc, F-30340 Salindres(FR)

(74) Mandataire: Le Pennec, Magali et al, RHONE-POULENC INTERSERVICES Service Brevets Chimie 25, Quai Paul Doumer, F-92408 Courbevoie Cédex(FR)

EP 0 255 453 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un nouveau procédé de préparation d'hexaalkyldisilane. Elle concerne plus précisément un procédé de préparation d'hexaalkyldisilane à partir d'halogénure de trialkylsilane.

Les différentes voies connues de synthèse des hexaalkyldisilanes peuvent être divisées en deux:

– la première voie consiste à mettre en présence un chlorure de trialkylsilane avec un métal (lithium, potassium ou sodium) dans l'éther, le tétrahydrofuranne ou dans les solvant aprotiques dipolaires, essentiellement l'hexaméthylphosphoramide. Elle est par exemple décrite par Gilman, Shiina, Aoki, Gaj, Wittenberg et Brennan dans le journal of Organometallic Chemistry 13 (1968) 323–328, par Pawlenko dans Houben-Weyl Vol. XIII, 5 page 301 et par SAKURAI et OKADA dans le Journal of Organometallic Chemistry 36 (1972) C 13. Les rendements annoncés en héxaméthyldisilane ne dépassent jamais 76% malgré des durées de réaction longues (environ 60 h). Une méthode peu différente mettant en œuvre du lithium, un chlorométhylsilane et des ultrasons est par exemple décrite par Boujouk et Han dans Tetrahedron letters, 22, 39, p 3813–3814, 1981. Les rendements obtenus en hexaalkyldisilane sont de l'ordre de 40%.

– la deuxième voie de synthèse décrite par exemple dans le brevet US 4 309 556 consiste à faire réagir du di(chlorométhyl)disilane avec un organomagnésien chloré dans le tétrahydrofuranne. Cette voie est inutilisable industriellement car le di(chlorométhyl)disilane n'est pas un produit industriel.

La première voie n'est pas non plus envisageable industriellement d'une part parce que les solvants de type éther ou héxaméthyl phosphoramide et d'autre part les métaux tels que le lithium rendent cette voie du point de vue sécurité inexploitable.

Aussi l'industrie est-elle toujours à la recherche d'une méthode de préparation sûre et peu onéreuse des composés du type hexaalkyldisilane.

Le présente invention a permis d'atteindre cet objectif et a pour objet un procédé de préparation d'hexaalkyldisilane caractérisé en ce que l'on met en présence :
- un halogénure de trialkylsilane de formule (I)

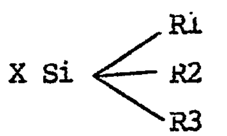

(I)

dans laquelle R1, R2, R3 identique ou différent représente un groupe alkyle contenant 1 à 6 atomes de carbone et X représente Cl, Br ou I,
- un métal alcalin choisi parmi Na, Li, K
- un sel $M^+ A^-$
dans lequel $A^-$ représente un anion choisi parmi $Cl^-$, $Br^-$, $I^-$, $CN^-$, $SCN^-$, $RS^-$, $C_6H_4O^-$, $RO^-$ où R représente un radical alkyle ayant 1 à 6 atomes de carbone, $M^+$ représente un métal alcalin, un ammonium IV
dans un solvant choisi parmi les hydrocarbures aliphatiques ou aromatiques, en présence d'un agent de transfert de phase de formule (II).

$N|-CHR_1-CHR_2-0-(CHR_3-CHR_4-0)_n-R_5|3$ (II)

dans laquelle n est un nombre entier supérieur ou égal à 0 et inférieur ou égal à 10 environ ($0 \leq n \leq 10$), $R_1$, $R_2$, $R_3$, $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical de formule $-C_mH_{2m}-\emptyset$, ou $C_mH_{2m+1}-\emptyset-$, m étant compris entre 1 et environ 12.

Parmi les halogénures de trialkylsilane on préfère utiliser les chlorures de trialkylsilane et en particulier le chlorure de triméthylchlorosilane car il est le plus facilement disponible industriellement.

Le métal est choisi parmi les métaux alcalins, tels que le sodium, le lithium et le potassium. Comme précisé auparavant dans le commentaire de l'art antérieur, dans l'industrie on évite l'emploi du lithium et du potassium à cause de leur danger d'utilisation et de leur prix trop élevé. On préfère utiliser le sodium. Le sel de formule $M^+A^-$ préféré est un sel dont le métal est un métal alcalin identique au métal utilisé ; on préfère alors utiliser un sel de sodium.

Parmi les sels de sodium on préfère utiliser le bromure ou l'iodure et tout particulièrement l'iodure qui peut être synthétisé in situ par action de l'iode sur le sodium métallique.

Le solvant est choisi parmi les hydrocarbures aliphatiques ou aromatiques. On peut citer parmi les solvants le toluène, le xylène, le décane, le dodécane, la décaline. On préfère utiliser la décaline.

Parmi les agents de transfert de phase de formule générale (I)

$N|-CHR_1-CHR_2-0-(CHR_3-CHR_4-0)_n-R_5|_3$ (II)

dans laquelle n est un nombre entier supérieur ou égal à 0 et inférieur ou égal à 10 environ (0 n 10), $R_1$, $R_2$, $R_3$, $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical de formule $-C_mH_{2m}$-Ø, ou $C_mH_{2m+1}$ -Ø-, m étant compris entre 1 et environ 12 ; on préfère utiliser ceux pour lesquels $R_1$, $R_2$, $R_3$ et $R_4$ représentent un atome d'hydrogène ou un radical méthyle, n est supérieur ou égal à 0 et inférieur ou égal à 6, et $R_5$ représente un radical alkyle ayant au maximum 4 atomes de carbone.

Parmi les composés de formule (II) on peut citer
- la tris(oxa-3 butyl)amine de formule :
$N(CH_2\text{-}CH_2\text{-}O\text{-}CH_3)_3$
- la tris(oxa-3 heptyl)amine de formule :
$N(CH_2\text{-}CH_2\text{-}O\text{-}C_4H_9)_3$
- la tris(dioxa-3,6 heptyl)amine de formule :
$N(CH_2\text{-}CH_2\text{-}O\text{-}CH_2\text{-}CH_2\text{-}O\text{-}CH_3)_3$
- la tris(trioxa-3,6,9 décyl)amine de formule :
$N(CH_2\text{-}CH_2\text{-}O\text{-}CH_2\text{-}CH_2\text{-}O\text{-}CH_2\text{-}CH_2\text{-}O\text{-}CH_3)_3$
- la tris(dioxa-3,6 octyl)amine de formule :
$N(CH_2\text{-}CH_2\text{-}O\text{-}CH_2\text{-}CH_2\text{-}OC_2H_5)_3$
- la tris(trioxa-3,6,9 undécyl)amine de formule :
$N(CH_2\text{-}CH_2\text{-}O\text{-}CH_2\text{-}CH_2\text{-}O\text{-}CH_2\text{-}CH_2\text{-}O\text{-}C_2H_5)_3$
- la tris(dioxa-3,6 nonyl)amine de formule :
$N(CH_2\text{-}CH_2\text{-}O\text{-}CH_2\text{-}CH_2\text{-}O\text{-}C_3H_7)_3$
- la tris(trioxa-3,6,9 dodécyl)amine de formule :
$N(CH_2\text{-}CH_2\text{-}O\text{-}CH_2\text{-}CH_2\text{-}O\text{-}CH_2\text{-}CH_2\text{-}O\text{-}C_3H_7)_3$
- la tris(dioxa-3,6 décyl)amine de formule :
$N(CH_2\text{-}CH_2\text{-}O\text{-}CH_2\text{-}CH_2\text{-}O\text{-}C_4H_9)_3$
- la tris(trioxa-3,6,9 tridécyl)amine de formule :
$N(CH_2\text{-}CH_2\text{-}O\text{-}CH_2\text{-}CH_2\text{-}O\text{-}CH_2\text{-}CH_2\text{-}O\text{-}C_4H_9)_3$
- la tris(tétraoxa)2,6,9,12 tridécyl)amine de formule :
$N(CH_2\text{-}CH_2\text{-}O(CH_2\text{-}CH_2\text{-}O\text{-})_3\text{-}CH_3)_3$
- la tris(dioxa)3,6 méthyl-4 heptyl)amine de formule :
$N(CH_2\text{-}CH_2\text{-}O\text{-}CHCH_3\text{-}CH_2\text{-}O\text{-}CH_3)_3$
- la tris(dioxa)3,6 diméthyl-2,4 heptyl)amine de formule :
$N(CH_2\text{-}CHCH_3\text{-}O\text{-}CHCH_3\text{-}CH_2\text{-}O\text{-}CH_3)_3$

On préfère tout particulièrement utiliser la tris(dioxa-3,6 heptyl)amine.

Pour une meilleure mise en oeuvre de l'invention on préfère utiliser une quantité de sel MA telle que le rapport molaire du sel à l'halogénure d'alkylsilane soit compris entre 0,001 et 0,1 et de préférence entre 0,005 et 0,02 et une quantité d'agent de transfert de phase telle que le rapport molaire agent de transfert de phase à l'alkylsilane soit compris entre 0,01 et 0,10 et est de préférence d'environ 0,05. Il est évident que le métal sera utilisé en quantité approximativement molaire par rapport à l'alkylsilane.

La température réactionnelle doit être située au-dessus du point de fusion du métal. Elle est de préférence comprise entre 100 et 180°C.

L'invention va être plus complètement décrite à l'aide des examples suivants qui ne doivent pas être considérés comme limitatifs de l'invention.

## EXEMPLES

### Exemple 1

Dans un réacteur de 125 ml, on charge 30 $cm^3$ de décaline, 5 g de sodium. On porte à 130°C sous agitation, ensuite on introduit 4 g d'un mélange 4/1 molaire de tris(dioxa 3,6 heptyl)amine / Li Br. Puis en 2 h, 23,5 g de triméthylchlorosilane. Après 8 h de réaction on obtient l'hexaméthyldisilane, avec un rendement par rapport au produit chargé de 75 % et un rendement par rapport au produit transformé de 80 %.

### Exemple 2

La procédure est la même que dans l'exemple 1, mais on introduit 3,5 g d'un mélange 9/1 molaire tris(dioxa 3,6 heptyl)amine / NaI. Après 6 h de réaction, on obtient l'hexaméthyldisilane avec un rendement par rapport au produit chargé de 90 % et un rendement par rapport au produit transformé de 93 %.

### Exemple 3

Procédure identique à l'exemple 1, mais on introduit 4,3 g d'un mélange 95/5 tris(dioxa 3,6 heptyl)amine /$I_2$. Après 6 h de réaction, on obtient l'hexaméthyldisilane avec un rendement de 87 % pour une sélectivité de 89 %.

Exemple 4

La procédure est la même qu'à l'exemple 1 mais on introduit 3,5 g d'un mélange 9/1 molaire de tris(dioxa 3,6 heptyl)amine/NaI. Puis en 2 h on introduit 33 g de butyldiméthylchlorosilane. Après 8 h de réaction on obtient le tétraméthyldibutyldisilane avec un rendement par rapport au produit chargé ou au produit transformé de 85 %.

Exemple 5 à 8

On injecte 0,21 Mole de triméthylchlorosilane sur un mélange de 0,21 atome gramme de sodium, d'agent de transfert de phase et de bromure de lithium dans 60 ml de décaline.

| essai | trisdioxahephtyl amine & molaire | LiBr % molaire | durée | rendement/ $(CH_3)_3SiCl$ transformé | rendement total |
|---|---|---|---|---|---|
| 5 | 9,2 | 9,2 | 6 | 63 | 61 |
| 6 | 4,8 | 4,8 | 6 | 57 | 44 |
| 7 | 0 | 6,1 | 5 h 30 | 0 | 0 |
| 8 | 2,4 | 2,4 | 7 | 66 | 46 |

Exemple 9 à 19

Ces exemples servent à illustrer la nature du sel MA mis en oeuvre

| oeuvre essai | durée | Na* | amine* | sel* | $Me_3SiCl$* | nature du sel | rendement rinal |
|---|---|---|---|---|---|---|---|
| 9 | 8 h 30 | 7 | 0,35 | | 7 | sans | 32 |
| 10 | 6 h 10 | 7 | 0,35 | 0,08 | 7 | LiCl | 72 |
| 11 | 8 h 30 | 7 | 0,35 | 0,08 | 7 | LiBr | 74 |
| 12 | 8 h | 7 | 0,35 | 0,08 | 7 | LiI | 76 |
| 13 | 4 h | 7 | 0,35 | 0,08 | 7 | NaI | 72 |
| 14 | 5 h | 7 | 0,35 | 0,04 | 7 | NaI | 89 |
| 15 | 15 h | 7 | 0,35 | 0,04 | 7 | KI | 74 |
| 16 | 8 h | 7 | 0,35 | 0,04 | 7 | $N(Bu)_4I$ | 81 |
| 17 | 10 h | 7 | 0,35 | 0,04 | 7 | $CH_3I$ | 62 |
| 18 | 6 h | 7 | 0,35 | 0,04 | 7 | $I_2$ | 86 |
| 19 | 15 h | 7 | 0,35 | 0,04 | 7 | KI | 74 |

*moles de réactif par litre de décaline

Exemples 20 à 25

Ces exemples illustrent la variation de la concentration en sel et en amine utilisée comme agent de transfert de phase. Les conditions réactionnelles et les réactifs sont les mêmes que dans les essais 9 à 19.

| essai | % molaire NaI/$Me_3SiCl$ | durée | rendement |
|---|---|---|---|
| 20 | 1,25 | 4 | 72 |
| 21 | 0,63 | 8 | 79 |
| 22 | 0,33 | 16 | 76 |
| essai | % amine/NaI molaire par rapport à $Me_3SiCl$ | durée | rendement |
| 23 | 5,4/0,33 | 6 h | 87 |
| 24 | 2,5/0,60 | 5h 30 | 90 |
| 25 | 1,38/1,38 | 5 h 30 | 87 |

## Revendications

1. Procédé de préparation d'hexaalkyldisilane caractérisé en ce que l'on met en présence :
- un halogénure de trialkylsilane de formule (I)

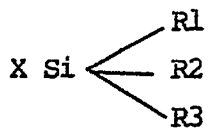

(I)

dans laquelle R1, R2, R3 identique ou différent représente un groupe alkyle contenant 1 à 6 atomes de carbone et X représente Cl, Br ou I,
- un métal alcalin choisi parmi Na, Li, K
- un sel $M^+A^-$
dans lequel $A^-$ représente un anion choisi parmi $Cl^-$, $Br^-$, $I^-$, $CN^-$, $SCN^-$, $RS^-$, $C_6H_4O^-$, $RO^-$ (où R représente un groupe alkyl ayant 1 à 6 atomes de carbone) $M^+$ représente un métal alcalin, un ammonium IV
dans un solvant choisi parmi les hydrocarbures aliphatiques ou aromatiques, en présence d'un agent de transfert de phase de formule (II).

$N[-CHR_1-CHR_2-0-(CHR_3-CHR_4-0)_n-R_5]_3$ (II)

dans laquelle n est un nombre entier supérieur ou égal à 0 et inférieur ou égal à 10 environ ($0 \leq n \leq 10$), $R_1$, $R_2$, $R_3$, $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical de formule $-C_mH_{2m}-Ø$, ou $C_mH_{2m+1}-Ø-$, m étant compris entre 1 et environ 12.

2. Procédé selon la revendication 1 caractérisé en ce que l'halogénure de trialkylsilane est un chlorure de trialkylsilane.

3. Procédé selon la revendication 1 caractérisé en ce que le métal alcalin choisi est le sodium.

4. Procédé selon la revendication 1 caractérisé en ce que dans le sel choisi $A^-$ est un iodure ou un bromure et de préférence un iodure.

5. Procédé selon la revendication 1 caractérisé en ce que dans le sel choisi $M^+$ est le sodium.

6. Procédé selon la revendication 1 caractérisé en ce que le métal choisi et le sodium et le sel choisi est l'iodure de sodium.

7. Procédé selon la revendication 6 caractérisé en ce que l'iodure de sodium est formé in situ par action de l'iode sur le sodium métallique.

8. Procédé selon la revendication 1 caractérisé en ce que le rapport molaire de sel MA à l'halogénure d'alkylsilane est compris entre 0,001 et 0,1 et de prédérence entre 0,005 et 0,02.

9. Procédé selon la revendication 1 caractérisé en ce que le rapport molaire de l'agent de transfert de phase de formule (II) à l'alkylsilane est compris entre 0,01 et 0,10 et de préférence est d'environ 0,05.

## Patentansprüche

1. Verfahren zur Herstellung von Hexaalkyldisilan, dadurch gekennzeichnet, daß man umsetzt:
– ein Halogenid eines Trialkylsilans der Formel (I)

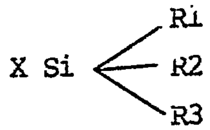 (I)

in der $R_1$, $R_2$ und $R_3$ identisch oder verschieden sind und jeweils ein Alkylgruppe mit 1 bis 6 Kohlenstoffatomen darstellen und in der X, Cl, Br oder J darstellt,
– ein Alkalimetall ausgewählt aus Na, Li, K
– ein Salz $M^+$ $A^-$, wobei $A^-$ ein Anion darstellt ausgewählt aus $Cl^-$, $Br^-$, $J^-$, $CN^-$, $SCN^-$, $RS^-$, $C_6H_4O^-$, $RO^-$ (worin R eine Alkylgruppe mit 1 bis 6 Kohlenstoffatomen darstellt) und wobei $M^+$ ein Alkalimetall oder ein Ammonium IV darstellt,
in einem Lösungsmittel ausgewählt aus den aliphatischen oder aromatischen Kohlenwasserstoffen, in Gegenwart eines Phasentransferagenz der der Formel (II)

$N[-CHR_1-CHR_2-0-(CHR_3-CHR_4-0)_n-R_5]_3$ (II)

in der n eine ganze Zahl größer oder gleich 0 und kleiner oder gleich 10 ist ($0 \leq n \leq 10$), in der $R_1$, $R_2$, $R_3$, $R_4$ identisch oder verschieden sind und jeweils ein Wasserstoffatom oder einen Alkylrest mit 1 bis 4 Kohlenstoffatomen darstellen und $R_5$ einen Alkylrest oder Cycloalkylrest mit 1 bis 12 Kohlenstoffatomen darstellt, einen Phenylrest oder einen Rest der Formel $-C_mH_{2m}-\varnothing$ oder $C_mH_{2m+1}-\varnothing$, worin m 1 bis ungefähr 12 sein kann.

2. Verfahren nach Anspruch 1, dadurch gekennzeichnet, daß das Halogenid des Trialkylsilans ein Chlorid eines Trialkylsilans ist.

3. Verfahren nach Anspruch 1, dadurch gekennzeichnet, daß das gewählte Alkalimetall Natrium ist.

4. Verfahren nach Anspruch 1, dadurch gekennzeichnet, daß in dem gewählten Salz $A^-$ ein Jodid oder ein Bromid und vorzugsweise ein Jodid ist.

5. Verfahren nach Anspruch 1, dadurch gekennzeichnet, daß in dem ausgewählten Salz $M^+$ Natrium ist.

6. Verfahren nach Anspruch 1, dadurch gekennzeichnet, daß das gewählte Metall Natrium ist und das gewählte Salz Natriumjodid ist.

7. Verfahren nach Anspruch 1, dadurch gekennzeichnet, daß das Natriumjodid in situ durch Einwirkung von Jod auf metallisches Natrium gebildet ist.

8. Verfahren nach Anspruch 1, dadurch gekennzeichnet, daß das molare Verhältnis des Salzes MA zu dem Halogenid des Alkylsilans zwischen 0,001 und 0,1 und vorzugsweise zwischen 0,005 und 0,02 liegt.

9. Verfahren nach Anspruch 1, dadurch gekennzeichnet, daß das molare Verhältnis des Phasentransferagenz der Formel (II) zu dem Alkylsilan zwischen 0,01 und 0,10 liegt und vorzugsweise etwa 0,05 beträgt.

## Claims

1. Process for the preparation of hexaalkyldisilane, characterized in that:
a trailkylsilane halide of formula (I)

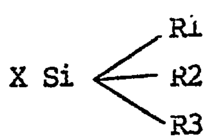 (I)

in which $R_1$, $R_2$ and $R_3$, which may be identical or different, represent an alkyl group containing 1 to 6 carbon atoms and X represents Cl, Br or I, is brought into contact with
an alkali metal chosen from amongst Na, Li and K and with
a salt $M^+$ $A^-$ in which $A^-$ represents an anion chosen from amongst $Cl^-$, $Br^-$, $I^-$, $CN^-$, $SCN^-$, $RS^-$, $C_6H_4O^-$ and $RO^-$ (in which R represents an alkyl group containing 1 to 6 carbon atoms) $M^+$ represents an alkali metal or an ammonium IV
in a solvent chosen from amongst aliphatic or aromatic hydrocarbons, in the presence of a phase transfer agent of formula (II):

$N[-CHR_1-CHR_2-0-(CHR_3-CHR_4-0)_n-R_5]_3$ (II)

in which n is an integer greater than or equal to 0 and less than or equal to approximately 10 ($0 \leq n \leq 10$), $R_1$, $R_2$, $R_3$ and $R_4$, which may be identical or different, represent a hydrogen atom or an alkyl radical containing 1 to 4 carbon atoms and $R_5$ represents an alkyl or cyclo-alkyl radical containing 1 to 12 carbon atoms, a phenyl radical or a radical of formula $-C_mH_{2m}-\varnothing$ or $C_mH_{2m+1}-\varnothing$, m being between 1 and approximately 12.

2. Process according to claim 1, characterized in that the trialkylsilane halide is a trialkylsilane chloride.

3. Process according to claim 1, characterized in that the alkali metal a chosen is sodium.

4. Process according to claim 1, characterized in that in the salt chosen, $A^-$ is an iodide or a bromide and preferably an iodide.

5. Process according to claim 1, characterized in that in the salt chosen, $M^+$ is sodium.

6. Process according to claim 1, characterized in that the metal chosen is sodium and the salt chosen is sodium iodide.

7. Process according to claim 6, characterized in that the sodium iodide is formed in situ by the action of iodine on sodium metal.

8. Process according to claim 1, characterized in that the molar ratio of the salt MA to the alkylsilane halide is between 0.001 and 0.1 and preferably between 0.005 and 0.02.

9. Process according to claim 1, characterized in that the molar ratio of the phase transfer agent of formula (II) to thealkylsilane is between 0.01 and 0.10 and preferably approximately 0.05.